# EUROPEAN PATENT APPLICATION

(11) **EP 4 696 978 A1**
(43) Date of publication of application: **18.02.2026**
(21) Application number: 24194573.2
(22) Date of filing: 14.08.2024
(51) Int. Cl.: G01C 15/00, G01C 15/08

(54) **APPARATUS AND METHOD FOR INDICATING A LAYOUT POINT AT A JOBSITE USING A TOTAL STATION**

(71) Applicant: Hilti Aktiengesellschaft, 9494 Schaan (LI)
(72) Inventor: Gogolla, Torsten, 9494 Schaan (LI); Winter, Andreas, 6800 Feldkirch (AT); Bellusci, Giovanni, 9470 Buchs (CH)
(74) Representative: Hilti Aktiengesellschaft Corporate Intellectual Property

(57) **Abstract**

An apparatus (10) for indicating a layout point (LP) at a jobsite (11), including a retroreflective target (T), a total station (12) configured to emit a measuring beam (MB) and/or a tracking light and configured to determine a position of the retroreflective target (T) in a first coordinate frame (CF-1) of the total station (12), a motorized layout pointer (14) including a layout pointer configured to emit a layouting beam (LB) that is visible, and a controller (13) configured to be communicatively connected to the motorized layout pointer (14) and/or the total station (12), wherein the layouting beam (LB) is rotatable about a first axis of rotation and a second axis of rotation.

## Description

The present invention relates to an apparatus for indicating a layout point at a jobsite according to the definition of claim 1, to a method for indicating a layout point at a jobsite according to the definition of claim 9, and to a computer program according to the definition of claim 14.

### Background of the invention

Surveying instruments are known to assist in critical building and construction functions. For example, building foundations and retaining walls must be engineered and constructed within a certain degree of accuracy if they are to perform their desired functions in a proper manner and maintain structural integrity over time. Surveying instruments, such as total stations, robotic total stations, theodolites, laser beam measuring instruments, and similar instruments are often used to achieve the desired degree of accuracy and precision for these features and operations.

From US 10,690,497 B2, an apparatus for indicating a layout point at a jobsite is known, the apparatus including a retroreflective target, a total station, a motorized layout pointer, and a controller. The motorized layout pointer is configured to be communicatively connected to the controller and to operate together with the total station, the total station is configured to measure a position of the retroreflective target in a first coordinate frame of the total station.

The motorized layout pointer comprises a support frame, a layout pointer configured to emit a layouting beam that is visible in a layouting direction (vertical direction), a control unit configured to control at least the layout pointer and to communicate with the controller and/or the total station, and a motor device including a first motor configured to perform a first movement of the layout pointer, a second motor configured to perform a second movement of the layout pointer, and a motor controller configured to control the first motor and second motor. The first motor is configured to move the layout pointer along a first axis of translation and the second motor is configured to move the layout pointer along a second axis of translation.

The apparatus known from US 10,690,497 B2 allows to search for a layout point on a jobsite surface that is a floor. For the operator, it is not possible to search for layout points on a jobsite surface that is a wall or a ceiling using the apparatus known from US 10,690,497 B2.

Furthermore, it is necessary to arrange the motorized layout pointer in the vicinity of the layout point, the layouting beam must be arranged above the layout point.

### Summary of the invention

Therefore, what is desired is an apparatus including a motorized layout pointer that assists an operator in rapid and accurate indicating a layout point at a jobsite. Preferably, the operator is assisted in indicating layout points on all jobsite surfaces including floors, walls and ceilings.

These objectives are achieved by realizing the features of the independent claims. Features which further develop the invention in an advantageous manner are described in the dependent claims.

According to an aspect of the present invention, the apparatus is characterized in that the layouting beam is rotatable about a first axis of rotation and a second axis of rotation. By using a layouting beam that is rotatable about a first axis of rotation and about a second axis of rotation, the layouting beam can be directed to any layout point at the jobsite and it is not necessary to arrange the motorized layout pointer in the vicinity of the layout points. The apparatus reduces the effort for an operator to indicate a layout point at a jobsite and allows to indicate layout points on floors, on ceilings, and on walls.

The apparatus according to the present invention includes the motorized layout pointer, a controller communicatively connected to the motorized layout pointer, a total station and a retroreflective target. The total station and the retroreflective target are used to determine the position and orientation of the motorized layout pointer in the coordinate frame, in which the coordinates of the layout point are defined.

Preferably, the motorized layout pointer further includes an optical matrix sensor, that is configured to measure an orientation of the measuring beam and/or the tracking light in a second coordinate frame of the motorized layout pointer, and a two-axes inclination sensor, that is configured to measure an orientation of a local gravity vector in the second coordinate frame of the motorized layout pointer.

To be able to indicate a layout point by means of the layouting beam emitted by the motorized layout pointer at the jobsite, the target coordinates of the layout point must be transferred to the second coordinate frame of the motorized layout pointer. The optical matrix sensor and the two-axes inclination sensor can be used to determine parameters that are necessary for the transformation.

In a preferred version, the motorized layout pointer further includes a motor device including a first motor, a second motor, and a motor controller, and a gimbal device including a first gimbal and a second gimbal, wherein the first motor is configured to rotate the first gimbal about the first axis of rotation, the second motor is configured to rotate the second gimbal about the second axis of rotation, and the motor controller is configured to control the first motor and second motor. Using a first motor to rotate the layouting beam about the first axis of rotation and a second motor to rotate the layouting beam about the second axis of rotation allows to rotate the layouting beam to any direction and to indicate layout points on any surface of a jobsite.

Preferably, the layout pointer is mounted on the second gimbal, wherein the second gimbal is rotatable about the second axis of rotation with respect to the first gimbal and the first gimbal is rotatable about the first axis of rotation with respect to the support frame. Mounting the layout pointer on the second gimbal that is rotatable about the second axis of rotation with respect to the first gimbal that is rotatable about the first axis of rotation with respect to the support frame allows to rotate the layout pointer to any direction and to indicate layout points on any surface of a jobsite.

Preferably, the motorized layout pointer further includes a first angle encoder and a second angle encoder, wherein the first angle encoder is configured to measure a first angle in a first plane essentially perpendicular to the first axis of rotation and the second angle encoder is configured to measure a second angle in a second plane essentially perpendicular to the second axis of rotation. Using a first angle encoder that allows to measure a first angle in a first plane essentially perpendicular to the first axis of rotation and a second angle encoder that allows to measure a second angle in a second plane essentially perpendicular to the second axis of rotation allows to rotate the layout pointer to any direction and to indicate a layout point on any surface of the jobsite.

Preferably, the motorized layout pointer further includes a distance measuring unit configured to measure a distance between a reference point of the distance measuring unit and a surface of the jobsite. By using a motorized layout pointer that can measure a distance to a surface of the jobsite, the accuracy of layouting can be increased. The measured distance can be compared with a distance that is derived from a floorplan, or the measured distance can be used to calculate actual coordinates of a layout point, wherein the actual coordinates can be compared with target coordinates of the layout point.

In a first preferred embodiment, the distance measuring unit emits a distance measuring beam that is different from the layouting beam. By using a distance measuring beam that is different from the layouting beam, the properties of the distance measuring beam can be adapted to distance measuring and the properties of the layouting beam can be adapted to indicating a layout point at the jobsite.

In a second preferred embodiment, the distance measuring unit emits a distance measuring beam that is also used as the layouting beam. By using a distance measuring unit that emits the layouting beam and the distance measuring beam, a compact motorized layout pointer can be realized.

In a preferred embodiment, the optical matrix sensor is integrated into the retroreflective target. The optical matrix sensor is configured to measure an orientation of the measuring beam and/or the tracking light emitted by the total station in a second coordinate frame of the motorized layout pointer. The retroreflective target can have more than one retroreflective section, wherein the properties of more than one retroreflective section can be adapted to different types of laser beam or light emitted by the total station. By integrating the optical matrix sensor into the retroreflective target, the risk that the optical matrix sensor cannot detect the measuring beam or the tracking light can be reduced.

According to a further aspect of the present invention, there is provided a method for indicating a layout point having target coordinates at a jobsite using a retroreflective target, a total station, a motorized layout pointer including a layouting beam that is visible and rotatable about a first axis of rotation and a second axis of rotation, and using a controller configured to be communicatively connected to the motorized layout pointer and/or to the total station, the method including:
▪ Transforming the target coordinates of the layout point to a second coordinate frame of the motorized layout pointer,
▪ Determining a first angle and a second angle for the motorized layout pointer to indicate the layout point by means of the layouting beam at the jobsite, and
▪ Instructing the motorized layout pointer to rotate the layouting beam to the determined first angle and second angle and to indicate an actual layout point at the jobsite.

The method for indicating a layout point according to the present invention allows to indicate layout points by means of the motorized layout pointer at all surfaces of a jobsite, such as floors, walls and ceilings. The target coordinates of the layout point are transferred to the second coordinate frame of the motorized layout pointer and the computer system that performs the method determines the direction (first angle in first plane and second angle in second plane) of the layouting beam that is necessary to indicate the layout point at the desired target coordinates. The first motor is instructed to rotate the first gimbal to the determined first angle and the second motor is instructed to rotate the second gimbal to the determined second angle.

In a preferred version, the method further includes:
▪ Instructing a distance measuring unit of the motorized layout pointer to measure a distance between a reference point of the distance measuring unit and the actual layout point indicated at the jobsite,
▪ Calculating actual coordinates for the actual layout point based on the measured distance and the determined first angle and second angle,
▪ Calculating a difference between the actual coordinates of the actual layout point and the target coordinates, and
▪ Comparing the difference between the actual coordinates of the actual layout point and the target coordinates with a gap that is predefined.

By instructing the distance measuring unit of the motorized layout pointer to measure the distance to the actual layout point, the accuracy of the layout point can be increased. The measured distance and the first and second angles can be used to calculate the actual coordinates of the actual layout point in the second coordinate frame of the motorized layout pointer or in the external coordinate frame of the jobsite. The difference between the actual coordinates of the actual layout point and the target coordinates can be calculated and compared with the gap, which defines an allowable deviation for the layout point and is predefined.

The next steps of the method depend on the comparison with the gap. If the difference between the actual coordinates of the actual layout point and the target coordinates is smaller than the gap, the method for indicating can be finished by displaying that the layout point can be indicated with the required accuracy (gap). If the difference is larger than the gap, the layout point cannot be indicated with the required accuracy and the method can be continued.

In a preferred version, the method of indicating a layout point is continued, if the difference between the actual coordinates of the actual layout point and the target coordinates is larger than the gap.

Preferably, the method further includes:
▪ Estimating an updated first angle and second angle for the motorized layout pointer to indicate an updated layout point at the jobsite by means of the layouting beam,
▪ Instructing the motorized layout pointer to rotate the layouting beam to the updated first angle and second angle and to indicate the updated layout point, and
▪ Instructing the distance measuring unit to measure a distance between the reference point of the distance measuring unit and the updated layout point.

To increase the accuracy of indicating a layout point that can be achieved, the computer system estimates an updated first angle and an updated second angle for the motorized layout pointer, wherein the first motor is instructed to rotate the first gimbal to the updated first angle and the second motor is instructed to rotate the second gimbal to the updated second angle. Since the exact geometry of the jobsite is not known, the first and second angles that are necessary to indicate the layout point at the desired planar position cannot be calculated exactly.

Preferably, the method further includes:
▪ Calculating actual coordinates for the updated layout point based on the measured distance and the updated first angle and second angle,
▪ Calculating a planar difference between the actual coordinates of the updated layout point and the target coordinates, and
▪ Comparing the planar difference with a planar gap that is predefined.

The steps of estimating updated first and second angles, rotating the layouting beam to the updated first and second angles, measuring a distance to the actual layout point, calculating actual coordinates for the actual layout point, calculating a planar difference between the actual and target coordinates and comparing the planar difference with a planar gap can be repeated until the planar difference between the actual and target coordinates is smaller than the planar gap, or the method of indicating a layout point can be finished after a predefined number of iterations of the afore-mentioned steps is performed.

According to a further aspect of the present invention, there is provided a computer program comprising instructions, which, when executed by a computer system, cause the computer system to carry out the method for indicating a layout point at a jobsite according to the present invention.

The computer program may be stored on the computer system or on a computer-readable medium communicatively connected to the computer system. The term "computer-readable medium" includes, but is not limited to, portable or non-portable storage devices, optical storage devices, and various other mediums capable of storing, containing, or carrying instruction(s) and/or data.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows an operator using an apparatus for indicating a layout point at a jobsite according to the present invention, the apparatus including a retroreflective target, a total station, a controller, and a motorized layout pointer,
- FIGS. 2A, B: show an exemplary version of the total station of FIG. 1 (FIG. 2A) and a block diagram of the main components of the total station as illustrated in FIG. 2A (FIG. 2B),
- FIGS. 3A, B: show an exemplary version of the controller of FIG. 1 (FIG. 3A) and a block diagram of the main components of the controller as illustrated in FIG. 3A (FIG. 3B),
- FIG. 4: shows the motorized layout pointer and the retroreflective target of the apparatus of FIG. 1,
- FIGS. 5A, B: show the motorized layout pointer and the retroreflective target of FIG. 4 in a first side view (FIG. 5A) and in a second side view (FIG. 5B),
- FIGS. 6A-C: show a method for indicating a layout point according to the present invention in a first version (FIG. 6A), in a second version (FIG. 6B) and in a third version (FIG. 6C), and
- FIGS. 7A-C: show schematically how a layout point can be indicated via the motorized layout pointer (FIG. 7A) and how measuring a distance between a reference point of the motorized layout pointer and the indicated layout point can help to increase the accuracy of indicating a layout point at the jobsite (FIGS. 7B, C).

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

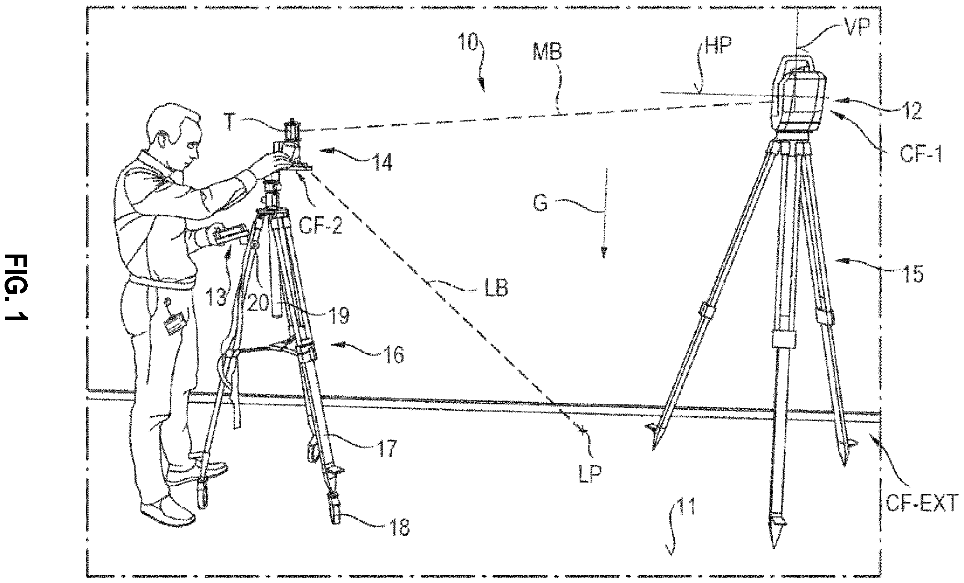

**FIG. 1** shows an operator using an apparatus **10** for indicating a layout point according to the present invention, the apparatus 10 deployed at a jobsite **11.** The jobsite 11 may be a construction site, inside or outside, or a surveying site, amongst others.

The apparatus 10 includes a retroreflective target **T,** a surveying instrument **12** that is formed as a total station, a controller **13** that is formed as a remote controller, and a motorized layout pointer **14.** In the exemplary version, the controller 13 is communicatively connected to the motorized layout pointer 14 and optionally to the total station 12 via a wireless connection **WC.**

The retroreflective target T is a target that is configured to reflect any laser beam or light emitted by the total station 12. The retroreflective target T can have one retroreflective section or more than one retroreflective section, wherein the properties of more than one retroreflective section can be adapted to different types of laser beam or light emitted by the total station 12. In an alternative version, the optical matrix sensor can be integrated into the retroreflective target.

In the exemplary version of FIG. 1, the total station 12 is mounted on a tripod **15** and the motorized layout pointer 14 is mounted on a moveable tripod **16.** The tripod 16 includes three legs **17,** which may be adjusted in length, three wheels **18,** which allow the motorized layout pointer 14 to move over the floor, and a central rod **19,** which may be adjusted along a height direction. In FIG. 1, the central rod 19 is arranged in its lowest position with respect to a head of the tripod 16. The motorized layout pointer 14 can be placed via the tripod 16 at whatever height is needed dependent on the conditions of the jobsite 11 between a minimum position and a maximum position.

By adjusting the height, at which the motorized layout pointer 14 is arranged, the size of the laser spot to indicate a layout point **LP** can be reduced; the smaller the laser spot on the jobsite 11, the higher the accuracy during layouting. For small angles between a floor of the jobsite 11 and a beam direction of a layouting beam **LB** emitted by the motorized layout pointer 14, an elongated laser spot can be created on the floor. By increasing the height, at which the motorized layout pointer 14 is arranged, the angle is getting larger, and the size of the laser spot is getting smaller.

The controller 13 can be mounted via a bracket element **20** to one of the legs 17 of the tripod 16 or to the central rod 19, wherein the position of the bracket element 20 may be shifted along the leg 17 or the central rod 19. The motorized layout pointer 14 can be connected to the central rod 19 via a connector, which may include a standard interface, e.g., 5/8 inches thread, such that the motorized layout pointer 14 can be connected to any preexisting movable and/or portable mounting support, such as the tripod 16, a bipod, a pole, or any other mounting support.

The total station 12 includes a distance measuring device that provides a capability of measuring a distance between the total station 12 with a measuring beam **MB;** the measuring beam MB can be a laser beam that is visible or infrared. The total station 12 further includes a first angle measuring device that provides a capability of measuring an azimuth angle (first angle) of the measuring beam MB in a horizontal plane **HP** that is substantially perpendicular to a local gravity vector **G** and a second angle measuring device that provides a capability of measuring an elevation angle of the measuring beam MB in a vertical plane **VP** that is substantially parallel to the local gravity vector G.

Before the operator can use the apparatus 10 for layouting, measuring and/or other applications, the total station 11 must be stationed via a stationing process to the jobsite 11. From prior art, different stationing processes are known, such as free-stationing processes, model-based stationing processes, automatic stationing processes, or any other stationing process.

Free-stationing processes use a set of at least two control points having known coordinates in the external coordinate frame CF-EXT to determine the pose vector of the total station 12. For the control points, the total station 12 measures angle and distance data, which can be transferred to Euclidian coordinates. For two control points, the pose vector can be computed analytically, and for three or more control points, the pose vector can be computed by least-square estimation of Euclidian transformation between two different point patterns. Details about least-square estimation can be found in "Least-squares estimation of transformation parameters between two point patterns." Umeyama, Shinji. IEEE Transactions on Pattern Analysis & Machine Intelligence 13.04 (1991): 376-380.

Model-based stationing processes do not use a set of control points to determine the pose vector of the total station 12 in the external coordinate frame CF-EXT; the concept of model-based stationing processes is based on the use of a polyline of the jobsite and on measurements to different sections of the polyline with the total station. The patent applications WO 2024/141424 A1 and WO 2024/141425 A1 disclose more details about model-based stationing processes for determining a pose for a surveying instrument.

Indicating a layout point, also called layouting, is a typical application of a total station at a jobsite. Layout points are indicated by means of the total station 12, the controller 13, and the motorized layout pointer 14. To differ between the coordinate frames, the coordinate frame of the total station 12 is called "first coordinate frame" **CF-1,** the coordinate frame of the motorized layout pointer 14 is called "second coordinate frame" **CF-2,** and the coordinate frame of the jobsite 11 is called "external coordinate frame" **CF-EXT.**

To be able to indicate the layout point LP by means of the motorized layout pointer 14 at the jobsite 11, the coordinates of the layout point LP must be transferred to the second coordinate frame CF-2 of the motorized layout pointer 14.

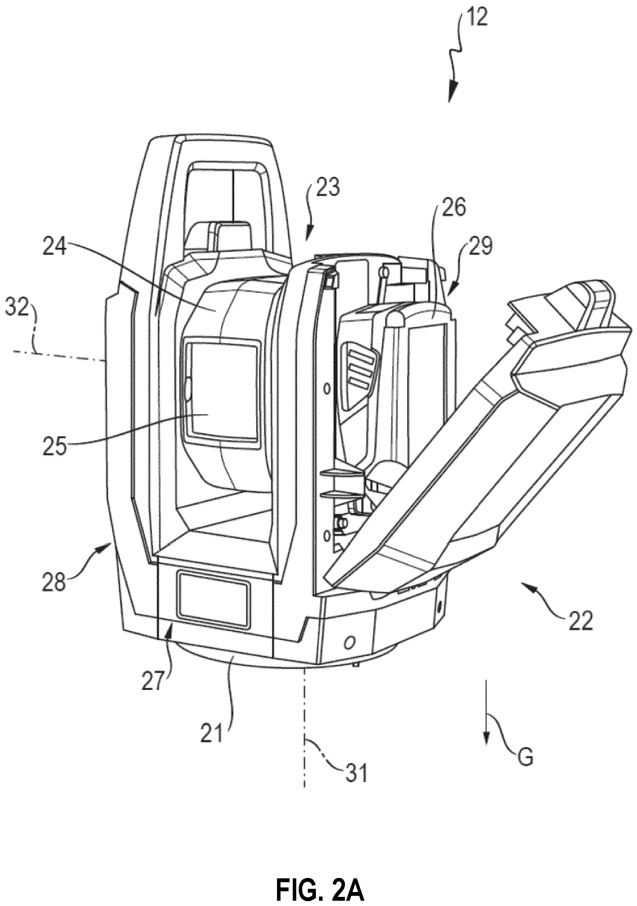

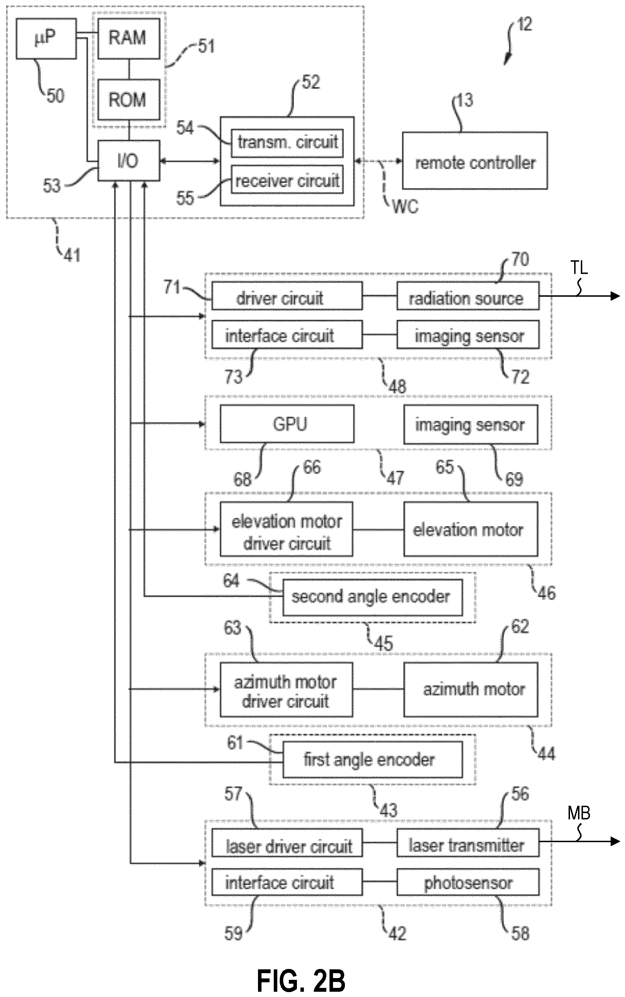

**FIGS. 2A****, B** show an exemplary version of the total station 12 of FIG. 1 in a perspective view (FIG. 2A) and a block diagram of the main components of the total station 12 as illustrated in FIG. 2A (FIG. 2B).

The total station 12 comprises a base **21,** a support **22,** and a measuring head **23.** The measuring head 23 is enclosed by a housing **24,** which includes an exit window **25.** In the housing 24, a distance measuring device that can emit a distance measuring beam and a tracking device that can emit a radiation are arranged. The distance measuring beam and the radiation are emitted through the exit window 25 to leave the housing 24.

In the exemplary version of FIG. 2A, the support 22 is U-formed and includes a bottom portion **27,** a first side portion **28,** and a second side portion **29.** The support 22 can rotate completely around its circumference at a full 360° angle with respect to the base 21 about a first axis of rotation **31.** The measuring head 23 is pivotably mounted to the support 22 about a second axis of rotation **32** and is arranged between the first side portion 28 and the second side portion 29 of the support. Usually, the first axis of rotation 31 is aligned perpendicular to the second axis of rotation 32.

An azimuth motor device and a first angle encoder may be located in the bottom portion 27 of the support 22 and allow to rotate the support 22 about the first axis of rotation 31 and to determine the direction of the distance measuring beam in a first plane perpendicular to the first axis of rotation 31. An elevation motor device and a second angle encoder may be located in the first side portion 28 of the support 22 and allow the measuring head 23 to pivot about the second axis of rotation 32 and to determine the direction of the distance measuring beam in a second plane perpendicular to the second axis of rotation 32. To make the instrument 12 fully automatic, a self-leveling device, which may be arranged in the bottom portion 27 of the support 22, can be included.

FIG. 2B shows a block diagram of the main components of the total station 12. The total station 12 includes a first electronic device **41,** a distance measuring device **42** emitting the measuring beam MB, a first angle encoder **43,** an azimuth motor device **44,** a second angle encoder **45,** and an elevation motor device **46.** Optionally, the total station 12 can additionally include one or more cameras, such as an overview camera device **47,** and a tracking device **48** configured to track a retroreflective target, such as the retroreflective target T, by using a tracking light **TL.**

The first electronic device 41 comprises a first processing circuit (µP) **50,** a first memory circuit **51** that may include associated random-access memory (RAM) and read only memory (ROM), a first communications circuit **52,** and a first input/output (I/O) interface circuit **53.** The first processing circuit 50, also called device control unit, may communicate with the first memory circuit 51 and first communications circuit 52 and is configured to control the laser instrument 12. The first communications circuit 52 includes a first transmitter circuit **54** and a first receiver circuit **55** and is configured to be connected to a communications circuit of the controller via the communication link. The first input/output interface circuit 53 is an interface between the first processing circuit 50 and the various types of motor driver circuits and sensor circuits of the measuring unit 15.

The distance measuring device 42 includes a laser transmitter **56,** a laser driver circuit **57,** a photosensor **58,** and a laser receiver interface circuit **59.** The laser driver circuit 57 provides current for the laser transmitter 56 which emits the measuring beam MB. The photosensor 58 receives at least a part of the measuring beam reflected at a target or a surface of the worksite, and the current signal that is outputted by the photosensor 58 is directed to the laser receiver interface circuit 59. After appropriate amplification, demodulation and processing, distance data are sent via the first input/output interface circuit 53 to the first processing circuit 50.

The first angle encoder 43 provides input signals to the first processing circuit 50, so that it knows exactly in which horizontal angle the laser transmitter 56 is arranged in the horizontal plane; the output signal of the first angle encoder 43 is directed to the first input/output interface circuit 53. The azimuth motor device 44 includes an azimuth motor **62,** which is the motive force to rotate the main housing 22 of the measuring unit 15 about the first axis of rotation 31, and an azimuth motor driver circuit **63,** which will provide the proper current and voltage to drive the azimuth motor 62.

The second angle encoder 45 provides input signals to the first processing circuit 50, so that it knows exactly in which second angle the laser transmitter 56 is arranged in the second plane; the output signal of the second angle encoder 45 is directed to the first input/output interface circuit 53. The elevation motor device 46 includes an elevation motor **65,** which is the motive force to pivot the measuring head 23 about the second axis of rotation 32, and an elevation motor driver circuit **66,** which will provide the proper current and voltage to drive the elevation motor 65.

The overview camera device 47 may be arranged in the measuring head 21 for capturing an image or a video feed generally in the direction of a sighting axis of the total station 12. The overview camera device 47 may include optical elements, such as, but not limited to, an objective and a focusing lens, a graphics processing unit (GPU) **68,** and a first imaging sensor 69, which may comprise or be constituted by a CCD-based sensor, an active pixel-sensor, a CMOS-based sensor, and/or by any other type of suitable imaging sensors.

The tracking device 48 includes an optical radiation source **70,** such as, but not limited to, an infrared (IR) transmitter or a visible light transmitter, a driver circuit **71,** a second imaging sensor **72,** and a receiver interface circuit **73.** The driver circuit 71 provides current for the optical radiation source 70 which emits the tracking light TL, such as, but not limited to, infrared radiation or visible radiation. The second imaging sensor 72 receives at least a part of the optical radiation reflected at a target, and the signal or multiple signals outputted by the second imaging sensor 72 is directed to the receiver interface circuit 73. After appropriate amplification and processing, the signal is sent via the first input/output interface circuit 52 to the first processing circuit 49 for further processing and/or analyzing. The optical radiation source 70 may be configured to emit modulated optical radiation in accordance with characteristics, such as, but not limited to, a frequency.

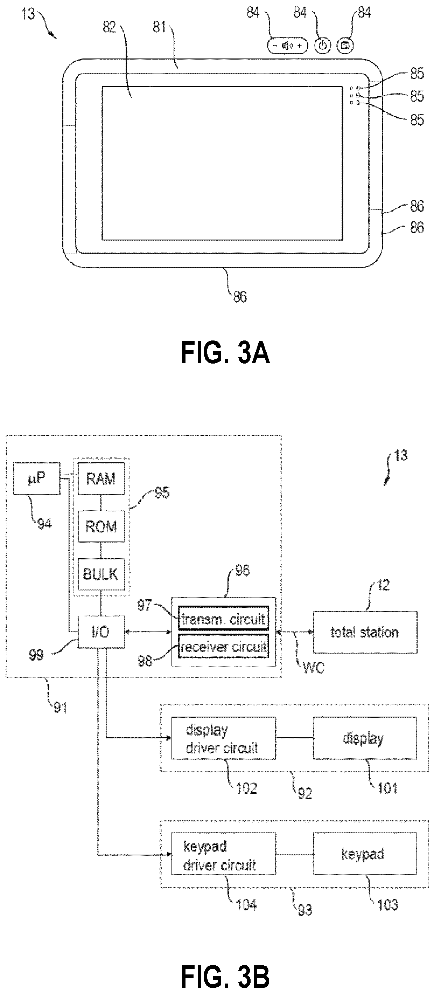

**FIGS. 3A****, B** show an exemplary version of the controller 13 used in the apparatus 10 of FIG. 1 in a front view (FIG. 3A) and a block diagram of the main components of the controller 13 as illustrated in FIG. 3A (FIG. 3B).

The controller 13 is designed as tablet computer and includes a housing **81,** a touch screen display **82,** a battery **83,** a set of buttons **84,** e.g., volume control button, power on/off button, and display control button, a set of indicators **85,** e.g., for operating status, data storage status, and battery status, a set of connectors **86,** e.g., for docking, data storage, and USB, and a card slot **87.**

FIG. 3B shows a block diagram of the main components of the controller 13. The controller 13 may include a second electronic device **91,** a display device **92,** and an input device **93.**

The second electronic device 91 comprises a second processing circuit (µP) **94,** a second memory circuit **95** that may include associated random-access memory (RAM), read only memory (ROM), and some type of bulk memory (BULK), a second communications circuit **96,** and a second input/output (I/O) interface circuit **97.** The second processing circuit 94 may communicate with the second memory circuit 95 and second communications circuit 96 and is configured to control the controller 13. The second communications circuit 96 includes a second transmitter circuit **98** and a second receiver circuit **99** and is configured to be connected to the first communications circuit 52 of the total station 12 via the wireless communication WC. The second input/output interface circuit 97 is an interface between the second processing circuit 94 and the various driver circuits of the controller 13.

In the second memory circuit 95 several program codes having computer-executable instructions for performing different methods may be stored. The stored program codes may include a program code for performing a method for indicating a layout point at a jobsite.

The term "computer system" is defined as a device or collection of devices, including input and output support devices, and excluding calculators which are not programmable and capable of being used in conjunction with external files, which contain computer programs, electronic instructions, input data and output data, that performs logic, arithmetic, data storage and retrieval, communication control and other functions.

In the exemplary version of the apparatus 10, the computer system is integrated into the second processing circuit 94 of the second electronic device 91 of the controller 13. Alternatively, the computer system may be integrated into the first processing circuit 50 of the total station 12, or into the first and second processing circuits 50, 94, or in any other type of suitable processing circuit, such as a control unit of the motorized layout pointer 14.

The display device 92 includes a display **101** and a display driver circuit **102.** The display driver circuit will be in communication with the second I/O interface circuit 97 and provides the correct interface and data signals for the display 101. If the controller 13 is a laptop computer, for example, then this would be the standard display seen in most laptop computers. Or, if the controller 13 is a tablet computer or a smart phone, in which case the display device is a much smaller physical device, the display device 101 could be a touch screen display.

The user-operated input device 93 includes a keypad **103** and a keypad driver circuit **104.** The keypad driver circuit will be in communication with the second I/O interface circuit 97 and controls the signals that interface to the keypad 103. If the display device 101 is a touch screen display, then there may not be a separate keypad on the controller 13, because most of the command or data to input functions will be available by touching the display itself and the keypad is integrated in the touch screen display. There may be some type of power on/off button, but that would not necessarily be considered a true keypad and typically would not be used for entering data.

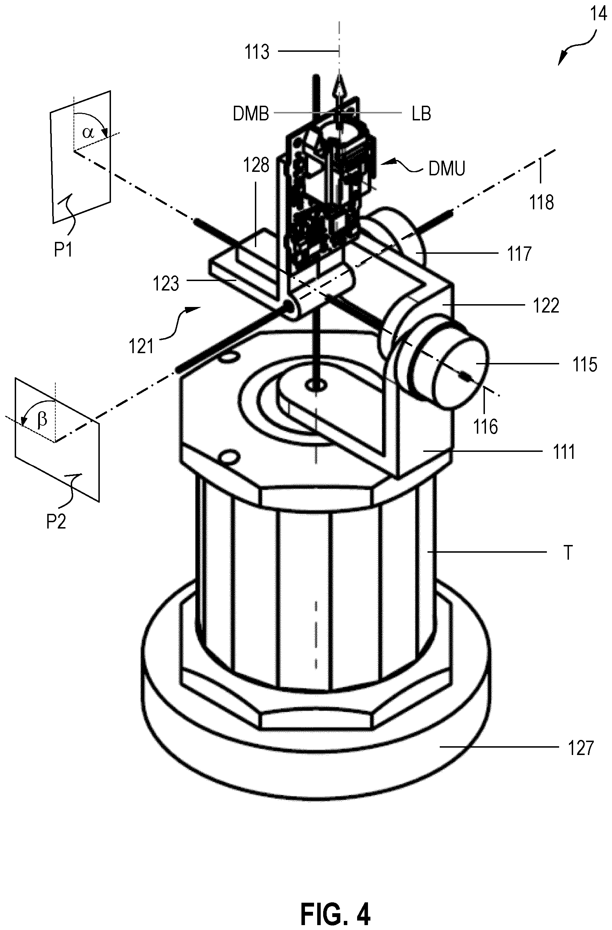

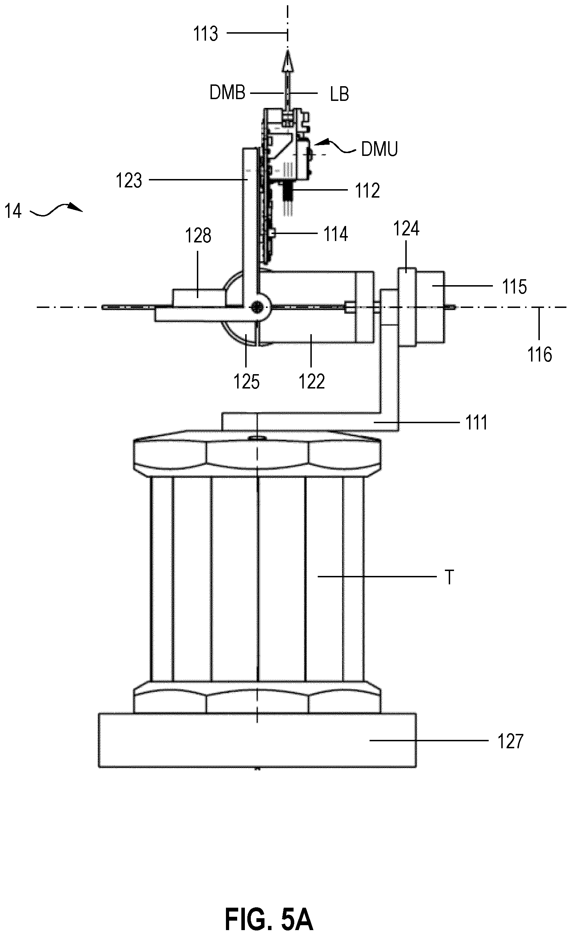

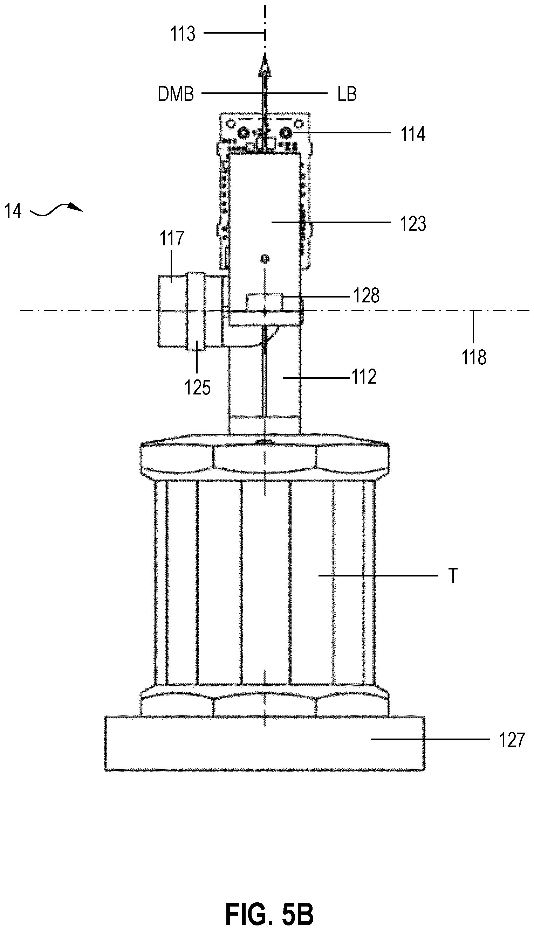

**FIGS. 4****,** **5A****,** **5B** show the motorized layout pointer 14 and the retroreflective target T of the apparatus 10 of FIG. 1 in a 3D view (FIG. 4), in a first side view (FIG. 5A) and in a second side view (FIG. 5B).

The motorized layout pointer 14 includes a support frame **111,** a layout pointer **112** configured to emit the layouting beam LB in a layouting direction **113,** a control unit **114** configured to control at least the layout pointer 112 and to communicate with the controller 13, and a motor device configured to perform a movement of the layout pointer 112. Additionally, the control unit 114 can be configured to communicate directly also with the total station 12, or the control unit 114 can communicate with the total station 12 via the controller 13.

In the exemplary version of the motorized layout pointer 14, the motor device includes a first motor **115** configured to rotate the layout pointer 112 about a first axis of rotation **116,** a second motor **117** configured to rotate the layout pointer 112 about a second axis of rotation **118,** and a motor controller **119** configured to control the first motor 115 and the second motor 117.

To realize the rotatability of the layout pointer 112 about the first axis of rotation 116 and second axis of rotation 118, the motorized layout pointer 14 further includes a gimbal device **121** including a first gimbal **122** and a second gimbal **123.** Using the first gimbal 122 and second gimbal 123 allows to realize the rotatability of the layout pointer 112 about the first axis of rotation 116 and second axis of rotation 118 by means of compact mechanical elements. The term "gimbal" is defined as pivoted support that permits rotation of an object about an axis of rotation.

In the exemplary version, the layout pointer 112 is mounted on the second gimbal 123, that is rotatable by means of the second motor 117 about the second axis of rotation 118 with respect to the first gimbal 122, and the first gimbal 122 is rotatable by means of the first motor 115 about the first axis of rotation 116 with respect to the support frame 111. Mounting the layout pointer 112 on the second gimbal 123 that is rotatable with respect to the first gimbal that is rotatable with respect to the support frame 111 allows to rotate the layout pointer 112 to any direction and to indicate a layout point on any surface of the jobsite.

The layout pointer 112 can be rotated by means of the gimbal device 121 and the motor device to any orientation. In order to measure the orientations of the layout pointer 112, the motorized layout pointer 14 includes a first angle encoder **124,** that is configured to measure a first angle α in a first plane P1 essentially perpendicular to the first axis of rotation 116, and a second angle encoder **125,** that is configured to measure a second angle β in a second plane **P2** essentially perpendicular to the second axis of rotation 118.

The motorized layout pointer 14 further includes an optical matrix sensor **127** and a two-axes inclination sensor **128.** The optical matrix sensor 127 is configured to measure an orientation of the measuring beam and/or the tracking light emitted by the total station 12 in the second coordinate frame CF-2 of the motorized layout pointer 14. The two-axes inclination sensor 128 is configured to measure an orientation of the local gravity vector G in the second coordinate frame CF-2 of the motorized layout pointer 14.

To be able to indicate the layout point LP via a laser spot of the motorized layout pointer 14 at the jobsite 11, the target coordinates of the layout point LP must be transferred to the second coordinate frame CF-2 of the motorized layout pointer 14.

A well-known method to determine the transformation from the external coordinate frame CF-EXT to the second coordinate frame CF-2 is to separate the transformation in a first transformation from the external coordinate frame CF-EXT to the first coordinate frame CF-1 of the total station 12 and a second transformation from the first coordinate frame CF-1 to the second coordinate frame CF-2.

The first transformation between the external coordinate frame CF-EXT and the first coordinate frame CF-1 is usually determined during a stationing processes of the total station 12, in which the pose vector (position and orientation) of the total station 12 in the external coordinate frame CF-EXT of the jobsite 11 is determined. Well-known stationing processes are free-stationing processes, model-based stationing processes, and automatic stationing processes, but any stationing process can be used to determine the pose vector of the total station 12 in the external coordinate frame CF-EXT.

For the second transformation, it is necessary to determine the position and orientation of the motorized layout pointer 14 in the first coordinate frame CF-1. The position of the motorized layout pointer 14 can be determined from the position of the retroreflective target T in the first coordinate frame CF-1 and in the second coordinate frame CF-2. Due to a rigidly coupling of the retroreflective target T and the motorized layout pointer 14, the position of the retroreflective target T in the second coordinate frame CF-2 is usually defined in fabric calibration, and the position of the retroreflective target T in the first coordinate frame CF-1 can be measured by means of the total station 12 (distance, azimuth angle and elevation angle).

To determine the orientation of the motorized layout pointer 14 in the first coordinate frame CF-1, an orientation of the measuring beam MB of the total station 12 and an orientation of the local gravity vector G are determined in the first coordinate frame CF-1 of the total station 12 and in the second coordinate frame CF-2 of the motorized layout pointer 14.

The optical matrix sensor 127 is used to measure the orientation of the measuring beam MB in the second coordinate frame CF-2, whereby at least the azimuth angle of this orientation is needed. The orientation of the measuring beam MB in the first coordinate frame CF-1 is derived from the measured position of the retroreflective target T in the first coordinate frame CF-1. The two-axes inclination sensor 128 is used to measure an orientation of the local gravity vector G in the second coordinate frame CF-2. As the Z-axis of the total station 12 is oriented essentially parallel to the local gravity vector G, the orientation of the local gravity vector G in the first coordinate frame CF-1 is also known.

Due to errors in the orientation of the sensor axes with respect to the gimbal axes (first axis of rotation 116 and second axis of rotation 118), the two-axes inclination sensor 128 should be calibrated. To calibrate the two-axes inclination sensor 128, the motor controller 119 and the control unit 114 of the motorized layout pointer 14 are configured to execute a calibration procedure, including the steps:
▪ Instructing the first motor 115 to rotate to at least two different first calibration angles and performing for each first calibration angle a measurement via the two-axes inclination sensor 128,
▪ Instructing the second motor 117 to rotate to at least two different second calibration angles and performing for each second calibration angle a measurement via the two-axes inclination sensor 128, and
▪ Estimating for each of the two axes of the two-axes inclination sensor 128 four parameters based on the measurements performed for the first calibration angles and the second calibration angles.

The apparatus 10 shown in FIG. 1 is configured to indicate the layout point LP having target coordinates in the external coordinate frame CF-EXT of the jobsite 11 via the total station 12, the controller 13, the motorized layout pointer 14, and the retroreflective target T. To increase the accuracy of indicating a layout point at the jobsite 11, the distance between a reference point of the motorized layout pointer 14 and the layout point can be measured.

To be able to measure the distance, the motorized layout pointer 14 can further include a distance measuring unit **DMU** that is configured to configured to emit a distance measuring beam **DMB.** From US 8,767,188 B2, US 9,261,362 B2, and US 9,310,197 B2, details about a distance measuring unit that can be used for the motorized layout pointer 14 are disclosed; generally, any type of distance measuring unit can be used.

In the exemplary version of the motorized layout pointer 14, the distance measuring unit DMU emits the distance measuring beam DMB that is also used as the layouting beam LB. Alternatively, the distance measuring unit DMU can emit a distance measuring beam DMB that is different from the layouting beam LB.

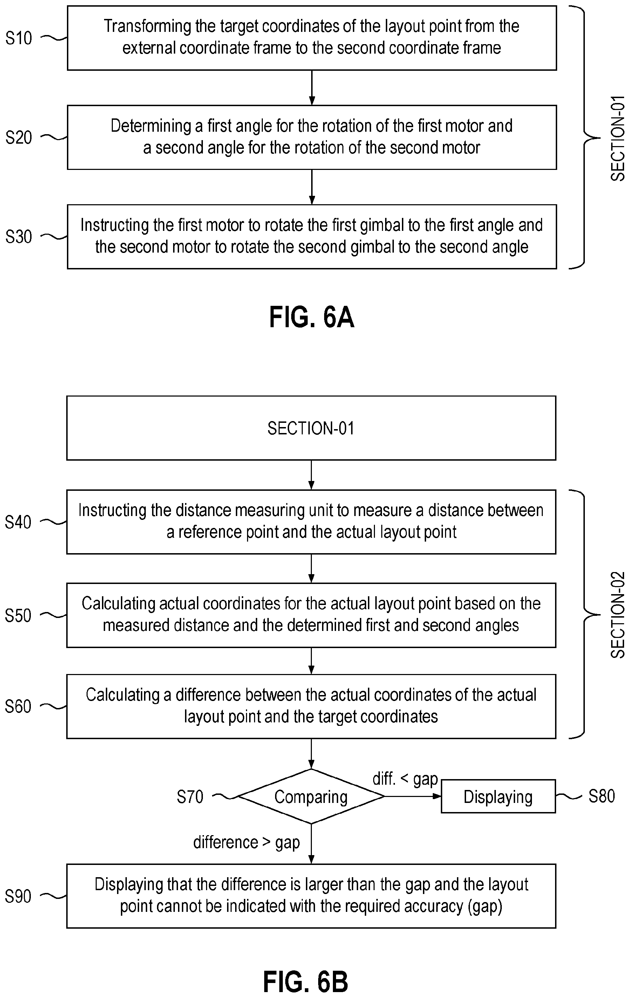

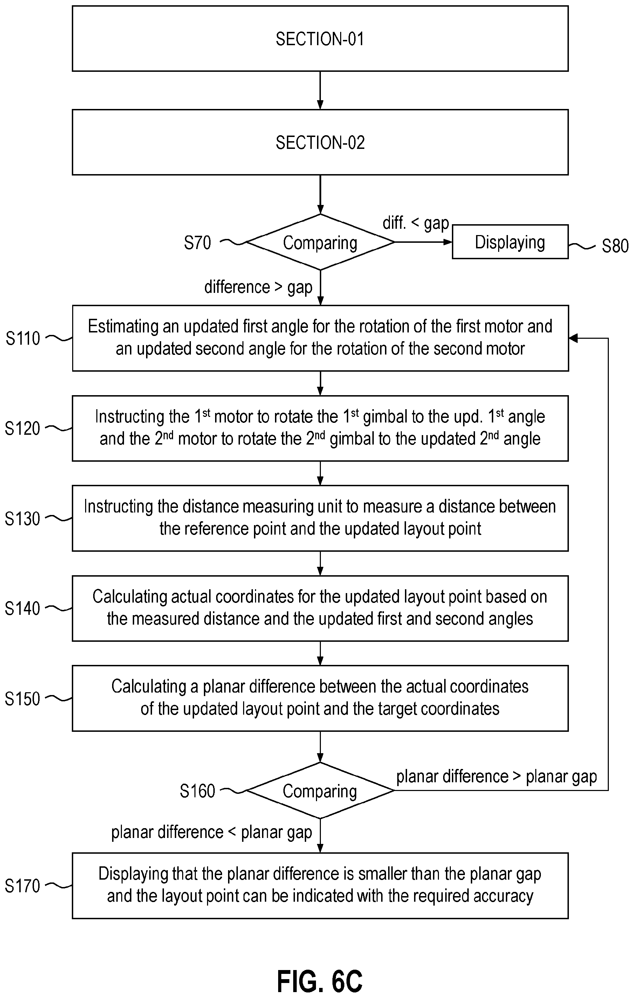

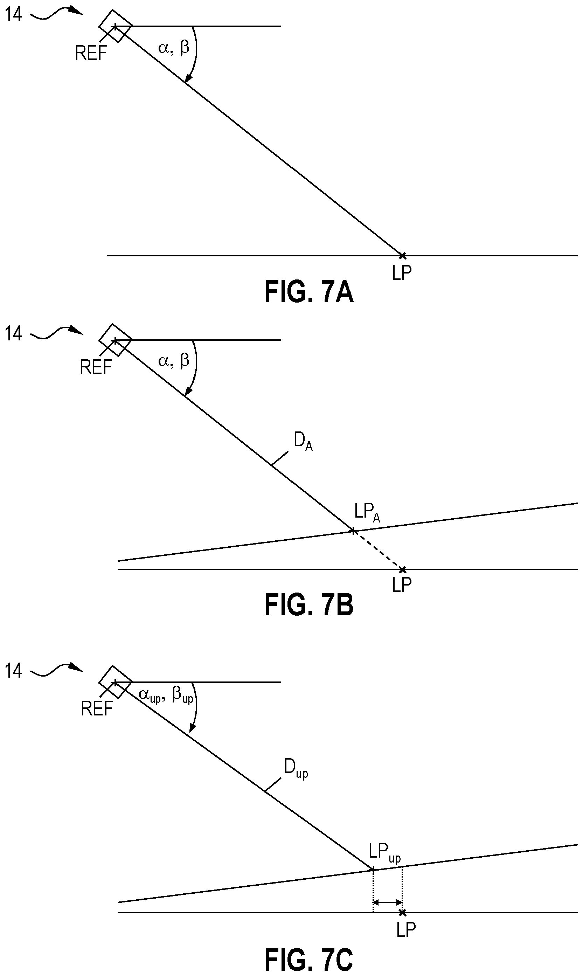

**FIGS. 6A-C** show a method for indicating a layout point at a jobsite according to the present invention using the motorized layout pointer 14 in a flow chart in a first version (FIG. 6A), in a second version (FIG. 6B) and in a third version (FIG. 6C), wherein the second and third version differ from the first version in that the distance measuring unit DMU is used to measure a distance to the layout point and the measured distance is used to improve indicating the layout point. **FIGS. 7A-C** show schematically how a layout point **LP** can be indicated via the motorized layout pointer 14 at the jobsite (FIG. 7A) and how measuring a distance between a reference point **REF** of the motorized layout pointer 14 and the indicated layout point can help to identify deviations between the actual jobsite and a floorplan and to indicate the layout point at least at the desired planar position (FIGS. 7B, C).

FIG. 6A shows the first version of the method for indicating a layout point. The layout point may have target coordinates in the external coordinate frame CF-EXT of the jobsite. In a step **S10,** the target coordinates of the layout point are transferred from the external coordinate frame CF-EXT to the second coordinate frame CF-2 of the motorized layout pointer 14. In a step **S20,** a direction of the layouting beam LB that is necessary to indicate the layout point at the target coordinates is computed, wherein the direction of the layouting beam is defined by a first angle α and a second angle β (FIG. 7A). In a step **S30,** the first motor 115 is instructed to rotate the first gimbal 122 to the determined first angle α and the second motor 117 is instructed to rotate the second gimbal 123 to the determined second angle β. When the layouting beam LB is oriented at the determined first and second angles α, β, an actual layout point **LP_{A}** is indicated at the jobsite. The steps S10, S20 and S30 are summarized as **SECTION-01.**

FIG. 6B shows the second version of a method for indicating a layout point according to the present invention. The second version differs from the first version of the method shown in FIG. 6A in that after performing step S10 (transferring the layout point to the external coordinate frame), step S20 (determining a first angle and second angle for the motorized layout pointer), and step S30 (rotating the layouting beam to the first angle and second angle) of the SECTION-01, the method of indicating a layout point is continued.

In a step **S40,** the distance measuring unit DMU is instructed to measure a distance **D_{A}** between the reference point REF of the distance measuring unit DMU and the actual layout point LP_{A} indicated at the jobsite 11 (FIG. 7B). In a step **S50,** the actual coordinates of the actual layout point LP_{A} in the external coordinate frame CF- EXT can be calculated from the position of the motorized layout pointer 14 in the external coordinate frame CF- EXT, from the measured distance D_{A} and from the first and second angles α, β that were determined in step S20. In a step **S60,** a difference between the actual coordinates of the actual layout point LP_{A} and the target coordinates is calculated. The steps S40, S50 and S60 are summarized as **SECTION-02.**

In a step **S70,** the difference between the actual coordinates and target coordinates is compared with a gap that is predefined. The gap considers several factors that can affect the accuracy of the apparatus 10 and the accuracy of indicating a layout point at a jobsite, including distance and angle accuracies of the total station 12 (accuracies of the distance measuring device 42, first angle encoder 43 and second angle encoder 45) and distance and angle accuracies (accuracies of the DMU, first angle encoder 124 and second angle encoder 125) of the motorized layout pointer 14.

FIG. 7B shows an inclined floor that differs from the even floor shown in a floorplan and the inclined floor causes that the layout point cannot be indicated at the intended target coordinates. For layouting applications on a floor, usually the horizontal position is needed. Measuring the distance between the actual coordinates of the actual layout point LP_{A} and the target coordinates can be used to indicate the layout point at least at the intended target coordinates in a horizontal plane.

After comparing the difference with the gap in step S70, the next steps depend on the result of comparing. In the exemplary version of FIG. 6B, the method of indicating a layout point is continued with displaying the result of comparing. In case that the difference between the actual coordinates of the actual layout point LP_{A} and the target coordinates is smaller than the gap (difference < gap in step S70), the display of the controller 13 can be instructed in a step **S80** to display that the difference is smaller than the gap and the layout point can be indicated with the gap, and, in case that the difference between the actual coordinates of the actual layout point LP_{A} and the target coordinates is larger than the gap (difference > gap in step S70), the display of the controller 13 can be instructed in a step **S90** to display that the difference is larger than the gap and the layout point cannot be indicated with the gap.

The second version of the method enables that the operator can be informed about deviations between the actual jobsite and the floorplan, and he can decide how to proceed. The operator can decide if it is necessary to stop the process of indicating the layout point, or if it is sufficient to indicate a layout point that is coincident with the target coordinates in a desired plane that can be a horizontal plane for indicating layout points on floors and ceilings and a vertical plane for indicating layout points on walls.

FIG. 6C shows the third version of a method for indicating a layout point according to the present invention. The third version differs from the second version of the method shown in FIG. 6B how the method is continued after the step S70 for the case that the difference between the actual coordinates of the actual layout point LP_{A} and the target coordinates is larger than the gap.

After comparing the difference with the gap in step S70, a series of steps can be performed. Instead of using 3D coordinates for the third version of the method, planar coordinates can be used for calculating the actual coordinates of the actual layout point and for the comparing the difference with the gap. The planar coordinates can be horizontal coordinates for indicating layout points on floors and ceilings and vertical coordinates for indicating layout points on walls.

In a step **S110,** an updated first angle αᵤₚ and an updated second angle βᵤₚ are estimated. In a step **S120,** the first motor 115 is instructed to rotate the first gimbal 122 to the updated first angle αᵤₚ and the second motor 117 is instructed to rotate the second gimbal 123 to the updated second angle βᵤₚ. When the layouting beam LB is oriented at the updated first and second angles αᵤₚ, βᵤₚ, an updated layout point **LPᵤₚ** is indicated at the jobsite.

In a step **S130,** the distance measuring unit DMU is instructed to measure a distance Dᵤₚ between the reference point REF of the distance measuring unit DMU and the updated layout point LPᵤₚ indicated at the jobsite 11 (FIG. 7C). In a step **S140,** the actual coordinates of the actual layout point LP_{A} can be calculated based on the measured distance Dᵤₚ and the updated first and second angles αᵤₚ, βᵤₚ that were determined in step S110. In a step **S150,** a planar difference between the actual coordinates of the actual layout point LP_{A} and the target coordinates is calculated.

In a step **S160,** the planar difference is compared with a planar gap that is predefined. The planar gap considers several factors that can affect the accuracy of the apparatus 10 and the accuracy of indicating a layout point at a jobsite. The planar gap can be a horizontal gap for layouting applications on floors and ceilings and a vertical gap for layouting applications on walls.

In the exemplary version of FIG. 6C, the method of indicating a layout point is continued with displaying the result of comparing. In case that the difference between the actual coordinates of the actual layout point LP_{A} and the target coordinates is smaller than the planar gap (planar difference < planar gap in step S160), the display of the controller can be instructed in a step **S170** to display that the layout point can be indicated with the planar gap. If the planar difference between the actual coordinates of the actual layout point LP_{A} and the target coordinates is larger than the planar gap (planar difference > planar gap in step S160), the method of indicating a layout point can be continued with step S110.

The steps of estimating an updated first angle and second angle (step S110), rotating the layouting beam to the updated first angle and second angle (step S120), measuring a distance to the actual layout point (step S130), calculating actual coordinates for the actual layout point (step S140), calculating a planar difference between the actual coordinates and target coordinates (step S150) and comparing the planar difference with the planar gap (step S160) can be repeated until the planar difference between the actual coordinates and target coordinates is smaller than the planar gap. Alternatively, the method of indicating a layout point at a jobsite can be finished after a predefined number of iterations of the afore-mentioned steps has been performed.

## Claims

1. An apparatus (10) for indicating a layout point (LP) at a jobsite (11), comprising:
▪ a retroreflective target (T),
▪ a total station (12) configured to emit a measuring beam (MB) and/or a tracking light (TL) and configured to determine a position of the retroreflective target (T) in a first coordinate frame (CF-1) of the total station (12),
▪ a motorized layout pointer (14) including a layout pointer (112) configured to emit a layouting beam (LB) that is visible, and
▪ a controller (13) configured to be communicatively connected to the total station (12) and/or to the motorized layout pointer (14),
**characterized in that** the layouting beam (LB) is rotatable about a first axis of rotation (116) and a second axis of rotation (118).

2. The apparatus of claim 1, wherein the motorized layout pointer (14) further includes an optical matrix sensor (127), that is configured to measure an orientation of the measuring beam (MB) and/or the tracking light (TL) in a second coordinate frame (CF-2) of the motorized layout pointer (14), and a two-axes inclination sensor (128), that is configured to measure an orientation of a local gravity vector (G) in the second coordinate frame (CF-2) of the motorized layout pointer (14).

3. The apparatus of any one of claims 1 to 2, wherein the motorized layout pointer (14) further includes a motor device (115, 117, 119) including a first motor (115), a second motor (117), and a motor controller (119), and a gimbal device (121) including a first gimbal (122) and a second gimbal (123), wherein the first motor (115) is configured to rotate the first gimbal (122) about the first axis of rotation (116), the second motor (117) is configured to rotate the second gimbal (123) about the second axis of rotation (118), and the motor controller (119) is configured to control the first motor (115) and second motor (117).

4. The apparatus of claim 3, wherein the motorized layout pointer (14) further includes a first angle encoder (124) and a second angle encoder (125), wherein the first angle encoder (124) is configured to measure a first angle (α) in a first plane (P1) essentially perpendicular to the first axis of rotation (116) and the second angle encoder (125) is configured to measure a second angle (β) in a second plane (P2) essentially perpendicular to the second axis of rotation (118).

5. The apparatus of any one of claims 1 to 4, wherein the motorized layout pointer (14) further includes a distance measuring unit (DMU) configured to measure a distance between a reference point of the distance measuring unit (DMU) and a surface of the jobsite (11).

6. The apparatus of claim 5, wherein the distance measuring unit (DMU) emits a distance measuring beam (DMB) that is different from the layouting beam (LB).

7. The apparatus of claim 5, wherein the distance measuring unit (DMU) emits a distance measuring beam (DMB) that is also used as the layouting beam (LB).

8. The apparatus of any one of claims 2 to 7, wherein the optical matrix sensor (127) is integrated into the retroreflective target (T).

9. A method for indicating a layout point (LP) having target coordinates at a jobsite (11) using a retroreflective target (T), a total station (12), a motorized layout pointer (14) including a layouting beam (LB) that is visible and rotatable about a first axis of rotation (116) and a second axis of rotation (118), and using a controller (13) configured to be communicatively connected to the motorized layout pointer (14) and/or the total station (12), the method including:
▪ Transforming the target coordinates of the layout point (LP) to a second coordinate frame (CF-2) of the motorized layout pointer (14),
▪ Determining a first angle (α) and a second angle (β) for the motorized layout pointer (14) to indicate the layout point by means of the layouting beam (LB) at the jobsite (11), and
▪ Instructing the motorized layout pointer (14) to rotate the layouting beam (LB) to the determined first angle (α) and second angle (β) and to indicate an actual layout point (LP_{A}) at the jobsite (11).

10. The method of claim 9, further including:
▪ Instructing a distance measuring unit (DMU) of the motorized layout pointer (14) to measure a distance (D_{A}) between a reference point (REF) of the distance measuring unit (DMU) and the actual layout point (LP_{A}),
▪ Calculating actual coordinates for the actual layout point (LP_{A}) based on the measured distance (D_{A}) and the determined first angle (α) and second angle (β),
▪ Calculating a difference between the actual coordinates of the actual layout point (LP_{A}) and the target coordinates, and
▪ Comparing the difference between the actual coordinates of the actual layout point (LP_{A}) and the target coordinates with a gap that is predefined.

11. The method of claim 10, wherein the method of indicating a layout point is continued, if the difference between the actual coordinates of the actual layout point (LP_{A}) and the target coordinates is larger than the gap.

12. The method of claim 11, further including:
▪ Estimating an updated first angle (αᵤₚ) and second angle (βᵤₚ) for the motorized layout pointer (14) to indicate an updated layout point at the jobsite (11) by means of the layouting beam (LB),
▪ Instructing the motorized layout pointer (14) to rotate the layouting beam (LB) to the updated first angle (αᵤₚ) and second angle (βᵤₚ) and to indicate the updated layout point (LPᵤₚ), and
▪ Instructing the distance measuring unit (DMU) to measure a distance (Dᵤₚ) between the reference point (REF) of the distance measuring unit (DMU) and the updated layout point (LPᵤₚ).

13. The method of claim 12, further including:
▪ Calculating actual coordinates for the updated layout point (LPᵤₚ) based on the measured distance (Dᵤₚ) and the updated first angle (αᵤₚ) and second angle (βᵤₚ),
▪ Calculating a planar difference between the actual coordinates of the updated layout point (LPᵤₚ) and the target coordinates, and
▪ Comparing the planar difference with a planar gap that is predefined.

14. A computer program comprising instructions, which, when executed by a computer system, cause the computer system to carry out the method for indicating a layout point (LP) at a jobsite (11) according to any one of claims 9 to 13.
